# EUROPEAN PATENT APPLICATION

(11) **EP 2 056 422 A1**
(43) Date of publication of application: **06.05.2009**
(21) Application number: 08168008.4
(22) Date of filing: 31.10.2008
(51) Int. Cl.: H02J 7/00, B60L 11/18

(54) **Battery discharge control system**

(30) Priority: 01.11.2007 JP 2007285422
(71) Applicant: Honda Motor Co., Ltd., Minato-ku Tokyo 107-8556 (JP)
(72) Inventor: Naganuma, Atsuhiro, Saitama 351-0193 (JP); Uchida, Shintaro, Saitama 351-0193 (JP)
(74) Representative: Rupp, Christian

(57) **Abstract**

A discharge control system of an electric storage pack has a plurality of electric rechargeable cells (C1-Cn) connected in series and a discharge line is connected from a electric rechargeable cell to a load driving feeding circuit (109). The discharge control system includes cell voltage detection units (S1-Sn) for detecting respective cell voltages of the plurality of cells, a switch group (111) made up of a plurality of switches (SW1-SW2n) connected between the plurality of cells (C1-Cn), and a control unit which designates a cell having a highest cell voltage in the plurality of electric rechargeable cells possessed by the electric storage pack in accordance with detection results by the cell voltage detection units (S1-Sn) and on/off controls the switches of the switch group (111) individually so as to form a discharge line from a electric rechargeable cell of the group to the load driving feeding circuit (109).

## Description

### Field of the Invention

The present invention relates to a discharge control system for controlling discharge from a plurality of electric rechargeable cells included in a electric storage pack so as to make uniform residual capacities or states of charge of the respective electric rechargeable cells.

### Description of Related Art

A electric storage pack for supplying electric power to a motor or the like is equipped on a vehicle such as EV (Electric Vehicle) or HEV (Hybrid Electrical Vehicle). The electric storage pack includes a plurality of electric rechargeable cells which are connected in series.

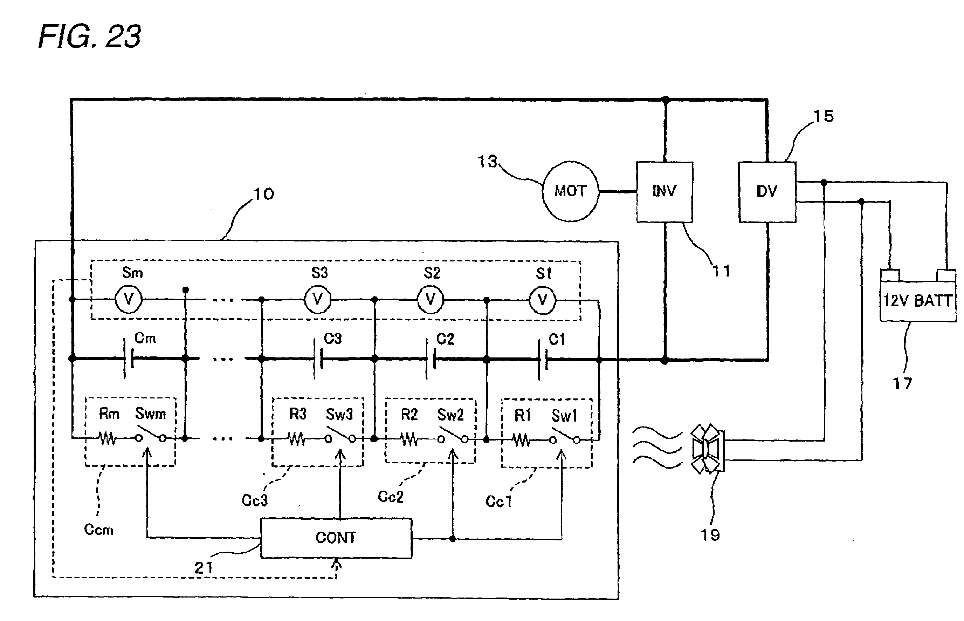

Fig. 23 is a block diagram showing a relationship between a electric storage pack, part of an electric drive system and auxiliaries which are equipped on a vehicle. The vehicle described in Fig. 23 includes a electric storage pack 10, an inverter 11, a motor 13, a DC-DC converter 15, a battery 17 and a cooling fan electric motor (hereinafter, referred to as an "electric motor") 19. An output voltage of the electric storage pack 10 is a high voltage (for example, 100 to 200V), and an output voltage of the battery 17 is an output voltage for auxiliaries (for example, a low voltage of 12V). The output voltage of the electric storage pack 10 is converted from direct current to alternating current by the inverter 11 so as to be supplied to the motor 13. The output voltage of the electric storage pack 10 is reduced low enough to charge the battery 17 by the DC-DC converter 15. The electric motor 19 is supplied with electric power by the battery 17, so as to drive a cooling fan to cool the electric storage pack 10 with air produced by the fan.

The electric storage pack 10 shown in Fig. 23 has a plurality of electric rechargeable cells (hereinafter, referred to simply as "cells") C1 to Cm (m is an integer which is 2 or larger) which are connected in series, discharge switch units Cc1 to Ccm which are connected to the respective cells in parallel, voltage detection units S1 to Sm which are connected to the respective cells in parallel, and a control unit 21 for controlling the respective discharge switch units. In addition, the discharge switch units Cc2 to Ccm, the voltage detection units S1 to Sm and the control unit 21 are integrated into an IC chip.

Each discharge switch unit has a discharge resistor R and a switch Sw which are connected in series. The voltage detection units S1 to Sm detect voltages at both ends of the cell (a cell voltage) with which it is connected in parallel. The control unit 21 on/off controls the respective switches of the discharge switch units in accordance with determination results by the voltage detection units S1 to Sm.

Further, the electric storage pack 10 has a charge control unit which is not shown. The charge control unit controls to prevent the overcharge of the respective cells (an overcharge preventive control) when the electric storage pack 10 is charged. The cell voltages of the respective cells vary depending on the state of using the electric storage pack 10 and/or qualities of the respective cells. Therefore, the charge control units implements an overcharge preventive control based on the cell having a highest cell voltage. In addition, lithium ion electric rechargeable cells or nickel-hydrogen electric rechargeable cells are used as the cells installed in the electric storage pack 10, and the overcharge preventive control is necessary particularly when the lithium ion electric rechargeable cells are used.

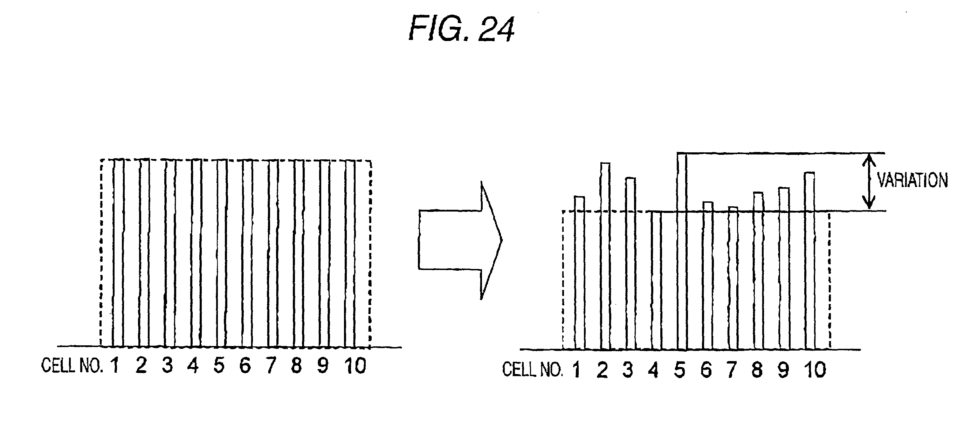

In this way, since the overcharge preventive control of the electric storage pack 10 is carried out based on the cell having the highest cell voltage, as shown in Fig. 24, when variation in cell voltage becomes large due to repetition of charging and discharging, the capacity of the electric storage pack 10 is reduced. Namely, since the whole residual capacity of the electric storage pack 10 is limited by the overcharge preventive control that is carried out when the electric storage pack 10 is charged, the capacity of the electric storage pack 10 is reduced as shown by dotted lines in Fig.24 as a result of the implementation of the overcharge preventive control. In the event that the capacity of the electric storage pack 10 is reduced, resulting in an insufficient supply of electric power to the motor 13, additional cells need to be installed in the electric storage pack 10 or the electric storage pack 10 needs to be replaced by a electric storage pack having a larger capacity.

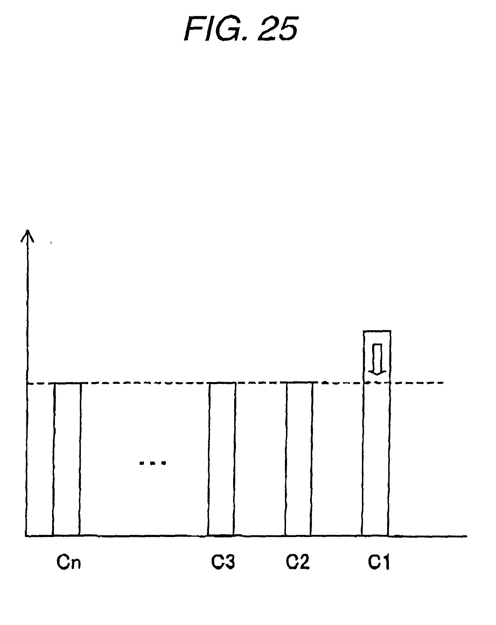

Therefore, in the electric storage pack 10 shown in Fig. 23, the control unit 21 controls individually the switches of the respective discharge switch units so that the cell voltages of the respective cells become the same in level. For example, as shown in Fig. 25, when the cell voltage of the cell C1 is higher than the cell voltages of the other cells C2 to Cm, the control unit 21 closes the switch Sw1 possessed by the discharge switch unit Cc1 which is associated with the cell C1 so as to close a circuit between the cell C1 and a discharge resistor R1. As this occurs, a current flows from the cell C1 to the discharge resistor R1, and the current is transformed into heat in the discharge resistor R1. As a result, the cell voltage of the cell C1 decreases, and when the cell voltage of the cell C1 goes down to the same level as the cell voltages of the cells C2 to Cm, the control unit 21 opens the switch Sw1. In this way, by making uniform the cell voltages of the respective cells so as to reduce the variation in cell voltage, the reduction in capacity of the electric storage pack can be prevented.

For example, refer to Japanese Unexamined Patent Publications JP-A-8-19188 and JP-A-2003-164069.

In the electric storage pack 10 described above, heat is produced in association with making uniform the cell voltages of the cells. Namely, in the electric storage pack 10, electric power stored in the cells is consumed wastefully by making uniform the cell voltages of the cells. Further, as has been described above, the integrated circuit made up of the discharge switch units Cc1 to Ccm, the voltage detection units S1 to Sm and the control unit 21 is provided in an interior of the electric storage pack 10. Since some constituent elements are included in the integrated circuit whose properties change depending on ambient temperatures, the discharge resistors R1 to Rm desirably have a smaller heat value.

According to Joule's law, the heat value of a resistor is proportional to "electric current² x resistance value." Therefore, resistors having a large resistance value are used for the discharge resistors R1 to Rm. Since the larger the resistance value of a discharge resistor, the smaller a discharge current, a quantity of heat generated in the discharge resistor is reduced. However, with a small discharge current, a longer time has to be spent in making uniform the cell voltages of the cells. Therefore, the resistance values of the discharge resistors R1 to Rm are determined based on a balance between the heat values of the discharge resistors and the time spent in making uniform the cell voltages. In any case, since heat is generated in the discharge resistors R1 to Rm in association with making uniform the cell voltages of the cells, a high-level of countermeasures against heat like heat dissipation or heat resistance need to be taken for the electric storage pack 10 so as to prevent the integrated circuit from being badly affected by the heat.

### SUMMARY OF INVENTION

The invention provides a discharge control system which can consume energy stored in a electric storage pack with good efficiency.

According to a first aspect of the invention, a discharge control system for a electric storage pack (for example, a electric storage pack 100 in an embodiment) has a plurality of electric rechargeable cells (for example, lithium ion electric rechargeable cells C1 to Cn in the embodiment) connected in series and a feeding circuit for driving a load which the circuit is connected discharge lines from the electric rechargeable cells, including a plurality of cell voltage detection units (for example, voltage detection units S1 to Sn in the embodiment) for detecting respective cell voltages of the plurality of electric rechargeable cells, a switch group (for example, a discharge switch unit 111) including a plurality of switches (for example, switches SW1 to SW2n in the embodiment) which are respectively connected between the electric rechargeable cells, and a control unit (for example, a control unit 121 in the embodiment) which designates a electric rechargeable cell having a highest cell voltage in the electric rechargeable cells possessed by the electric storage pack as a group in accordance with detection results by the cell voltage detection units and forms a discharge line from the electric rechargeable cell of the group to the feeding circuit by controlling the switches of the switch group individually.

Furthermore, according to a second aspect of the invention, the electric rechargeable cells may comprise lithium ion electric rechargeable cells.

In addition, according to a third aspect of the invention, the switch group may have a first switch group including a plurality of first switches (for example, switches SW1 and SW2, SW4, ..., SW2n-2 in the embodiment) which are connected to a negative side input terminal of the feeding circuit, and a second switch group including a plurality of second switches (for example, SW3, SW5, . . ., SW2n-1 and SW2n) which are connected to a positive terminal of the feeding circuit, and wherein the control unit closes any one of first switches in the first switch group and any one of second switches in the second switch group, so as to form a discharge line from the plurality of electric rechargeable cells to the feeding circuit.

Additionally, according to a fourth aspect of the invention, the control unit may select the electric rechargeable cell to be designated as forming the group so that a discharge voltage of the electric rechargeable cell designated as forming the group falls within a voltage range which can drive the load.

Furthermore, according to a fifth aspect of the invention, when a different electric rechargeable cell becomes a electric rechargeable cell having a highest cell voltage as a result of discharge from the electric rechargeable cell designated as forming the group, the control unit may designate the different electric rechargeable cell as a different group and forms a discharge line from the different electric rechargeable cell of the different group to the feeding circuit.

According to a sixth aspect of the invention, when a electric rechargeable cell having a lowest cell voltage in electric rechargeable cells designated as forming the group becomes a electric rechargeable cell having a lowest cell voltage in the plurality of electric rechargeable cells possessed by the electric storage pack as the result of discharge from the electric rechargeable cell designated as forming the group, the control unit may designate a electric rechargeable cell having a highest cell voltage in the electric rechargeable cells possessed by the electric storage pack as forming a different group and forms a discharge line from the electric rechargeable cell of the different group to the feeding circuit.

In addition, according to a seventh aspect of the invention, the control unit may exclude a group which is designated as forming a group including a electric rechargeable cell having a lowest cell voltage in the electric rechargeable cells possessed by the electric storage pack from the group to be selected.

Additionally, according to an eighth aspect of the invention, the switch group may have a first switch group including a plurality of first switches (for example, SW1 and SW2, SW4, ..., SW2n-2 in the embodiment) which are connected to a negative side input terminal of the feeding circuit, and a second switch group including a plurality of second switches (for example, SW3, SW5, ..., SW2n-1 and SW2n) which are connected to a positive side terminal of the feeding circuit, and wherein the control unit may close any one of first switches in the first switch group and any one of second switches in the second switch group, so as to form a discharge line from a electric rechargeable cell having a highest cell voltage in the plurality of electric rechargeable cells possessed by the electric storage pack to the feeding circuit.

Furthermore, according to a ninth aspect of the invention, when the cell voltage of the electric rechargeable cell having the highest cell voltage becomes equal to a cell voltage of a electric rechargeable cell having a lowest cell voltage in the plurality of electric rechargeable cells possessed by the electric storage pack as a result of discharge from the electric rechargeable cell having the highest voltage, the control unit may switch the discharge line.

In addition, according to a tenth aspect of the invention, when the cell voltage of the electric rechargeable cell having the highest cell voltage becomes equal to a value resulting from subtraction of a predetermined value from the cell voltage of a electric rechargeable cell having a second highest cell voltage in the plurality of electric rechargeable cells possessed by the electric storage pack as a result of discharge from the electric rechargeable cell having the highest voltage, the control unit may switch the discharge line.

Furthermore, according to an eleventh aspect of the invention, the cell voltage detection units may detect continuously or periodically cell voltages of the plurality of electric rechargeable cells, and wherein the control unit continuously controls the switches in accordance with detection results by the cell voltage detection units.

### BRIEF DESCRIPTION OF THE DRAWINGS

Fig. 1 is a block diagram showing a relationship between a electric storage pack according to a first embodiment, part of an electric drive system and auxiliaries which are equipped on a vehicle.
Fig. 2 is a circuit diagram showing a electric storage pack 100 of a first embodiment which has eight cells C1 to C8.
Fig. 3 is a diagram showing cell discharges to the electric storage pack shown in Fig. 2 and an on/off pattern of switches.
Fig. 4 is a diagram showing a relationship between a single cell's output voltage, the number of discharge cells, a maximum cell voltage and a discharge voltage.
Fig. 5 is a flowchart illustrating a group setting operation by a control unit 121 which is possessed by the electric storage pack 100 of the first embodiment.
Fig. 6 is a diagram showing an example of cell voltages of cells which are installed in the electric storage pack 100.
Fig. 7 is a flowchart illustrating a different group setting by the control unit possessed by the electric storage pack of the first embodiment.
Fig. 8 is a diagram showing an example of cell voltages of cells installed in the electric storage pack 100 of the first embodiment.
Fig. 9 is a flowchart illustrating a first group switching by the control unit possessed by the electric storage pack of the first embodiment.
Fig. 10 is a diagram showing an example of cell voltages of cells installed in the electric storage pack 100 of the first embodiment.
Fig. 11 is a flowchart illustrating a second group switching by the control unit possessed by the electric storage pack of the first embodiment.
Fig. 12 is a diagram showing an example of cell voltages of cells installed in the electric storage pack 100 of the first embodiment.
Fig. 13 is a diagram showing an example of cell voltages of cells installed in the electric storage pack 100 and groups A to D.
Fig. 14 is a diagram showing an example of cell voltages of cells installed in the electric storage pack 100.
Fig. 15 is a flowchart illustrating a discharge control by a control unit possessed by a electric storage pack of a second embodiment.
Fig. 16 is a diagram showing an example of cell voltages of cells installed in the electric storage pack of the second embodiment.
Fig. 17 is a flowchart illustrating a discharge control by a control unit possessed by a electric storage pack of a third embodiment.
Fig. 18 is a diagram showing an example of cell voltages of cells installed in the electric storage pack of the third embodiment.
Fig. 19 is a block diagram showing an embodiment in which a DCDC converter is added to the vehicle's interior configuration shown in Fig. 1.
Fig. 20 is a block diagram showing an embodiment in which an insulating DCDC converter is added to the vehicle's interior configuration shown in Fig. 1.
Fig. 21 is a block diagram showing an embodiment in which a resistor and a switch are added to the vehicle' s interior configuration shown in Fig. 1.
Fig. 22 is a block diagram showing an embodiment in which a capacitor is added to the vehicle's interior configuration shown in Fig. 1.
Fig. 23 is a block diagram showing a relationship between a electric storage pack, part of an electric drive system and auxiliaries which are equipped on a vehicle.
Fig. 24 is a diagram showing variations in cell voltages of cells which are installed in the electric storage pack 100 shown in Fig. 23 and a reduction in capacity of the electric storage pack 100.
Fig. 25 is a diagram showing an example of cell voltages of cells installed in the electric storage pack 100 shown in Fig. 23.

### DETAILED DESCRIPTION OF THE PREFERED EMBODIMENT

Hereinafter, embodiments of the invention will be described by reference to the drawings. A electric storage pack which will be described in the following embodiments is such as to be equipped on a vehicle such as EV (Electric Vehicle) and HEV (Hybrid Electric Vehicle) to supply electric power to a motor or the like. In addition, a plurality of electric rechargeable cells connected in series are provided in the electric storage pack. In the embodiments which will be described hereinafter, lithium ion electric rechargeable cells are used as such electric rechargeable cells. However, as other embodiments, nickel-hydrogen electric rechargeable cells, electric double-layer capacitors, capacitors and the like may be used. In addition, it should be understood that when used in this specification, "discharge" means not energy output for supplying electric power from the electric storage pack to the motor but energy output for making uniform cell voltages of the respective cells installed in the electric storage pack.

### (First Embodiment)

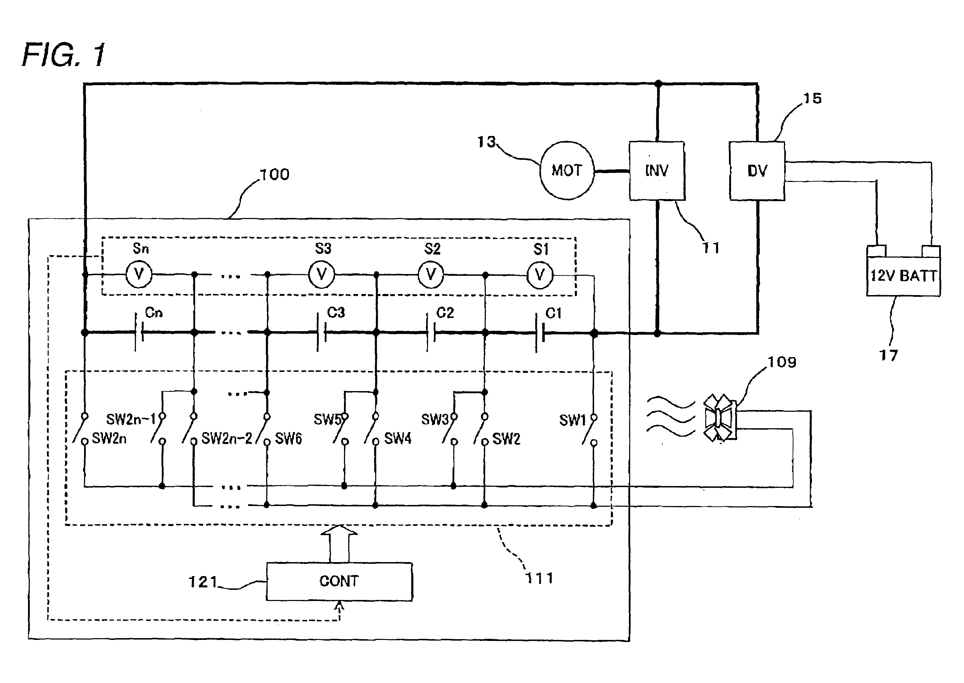

Fig. 1 is a block diagram showing a relationship between a electric storage pack according to a first embodiment, part of an electric drive system and auxiliaries which are equipped on a vehicle. The vehicle described in Fig. 1 includes a electric storage pack 100 of the first embodiment, an inverter 11, a motor 13, a DC-DC converter 15, a battery 17, and a cooling fan electric motor (hereinafter, referred to as an "electric motor") 109 which is a rotary induction load. The inverter 11, the motor 13, the DC-DC converter 15 and the battery 17 are the same as those constituent elements shown in Fig. 23.

An output voltage of the electric storage pack 100 of this embodiment is a high output voltage (for example, 100 to 200V), and an output voltage of the battery 17 is an output voltage for auxiliaries (for example, a low voltage of 12V). The output voltage of the electric storage pack 100 is transformed from direct current to alternating current by the inverter 11 for supply to the motor 13. The output voltage of the electric storage pack 100 is reduced low enough to charge the battery 17 by the DC-DC converter 15. Electric power is supplied to the electric motor 109 by discharge from cells installed in the electric storage pack 100, and an airflow produced by the cooling fan driven by the electric motor 109 cools the electric storage pack 100.

In addition, the operation of the electric motor 109 is ensured by a drive voltage of 9 to 14V. Not only in this embodiment but also in other embodiments, the auxiliary is not limited to the cooling fan electric motor 109 but may be an electric motor for a coolant pump or an electric motor for a blower of an air cleaner. In addition, a destination to the supply of electric power by the cell discharge is not limited to the electric motor 109 which is the rotary induction load but may be a feeding circuit for feeding a capacity variable load. The capacity variable load includes a hot wire used in a seat heater, a lamp used as a back light for an instrument cluster, a Peltier element, an air cleaner and the like. Furthermore, electric power resulting from cell discharge may be supplied not only to the electric motor 109 but also to the electric motor 109 and other auxiliaries at the same time.

The electric storage pack 100 shown in Fig. 1 has a plurality of lithium ion electric rechargeable cells (hereinafter, referred to simply as "cells") C1 to Cn (n is an integer which is 2 or larger) which are connected in series, a discharge switch unit 111 which is connected to the cells C1 to Cn in parallel, voltage detection units S1 to Sn which are connected to the respective cells in parallel, and a control unit 121 for controlling the discharge switch unit 111. In addition, the discharge switch unit 111, the voltage detection units S1 to Sn and the control unit 121 are integrated into an IC chip.

Here, a single output voltage range of the cells C1 to Cn is in the range of 2.5 to 4.0V. Note that a relationship between SOC (State of Charge) and output voltage of a lithium ion battery is substantially linear, and in the electric storage pack equipped on the vehicle, charging and discharging are repeated within a predetermined range of residual capacity (SOC) of the cells.

The discharge switch unit 111 has switches SW1 to SW2n which are connected between the cells. In addition, the switches SW1 and SW2, SW4, ..., SW2n-2 are connected to a negative side input terminal of the electric motor 109, while the switches SW3, SW5, . . ., SW2n-1 and SW2n are connected to a positive side input terminal of the electric motor 109.

The voltage detection units S1 to Sn detect voltages at both ends of the cells with which they are connected in parallel (cell voltages). In addition, the voltage detection units S1 to Sn detect cell voltages of the cells continuously or periodically and send detection results to the control unit 121.

The control unit 121 determines the SOC of the respective cells based on the detection results sent from the voltage detection units S1 to Sn. In addition, as has been described above, the relationship of SOC and output voltage of the lithium ion battery is substantially linear and a relationship of SOC and output voltage of each cell is also substantially linear. The control unit 121 on/off controls individually the switches SW1 to SW2n within the discharge switch unit 111 based on latest detection results in relation to SOC so that the SOC of the cells, that is, cell voltages of the cells become the same in level. By the on/off control of the switches SW1 to SW2n by the control unit 121, a continuous discharge line is established from at least one cell to the electric motor 109. Consequently, electric power is supplied to the electric motor 109 from the cell that is included in a closed circuit made by the on/off control by the control unit 121. For example, when the control unit 121 closes the switches SW1, SW3 and opens the other switches, electric power is supplied to the electric motor 109 from the cell C1. In addition, when the control unit 121 closes the switches SW4, SW2n and opens the other switches, electric power is supplied to the electric motor 109 from the cells C3 to Cn.

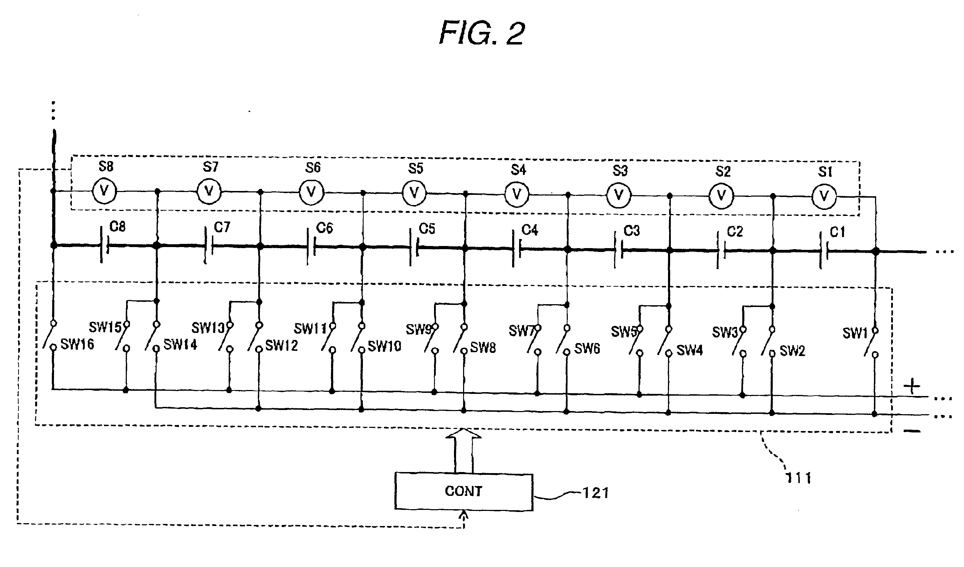

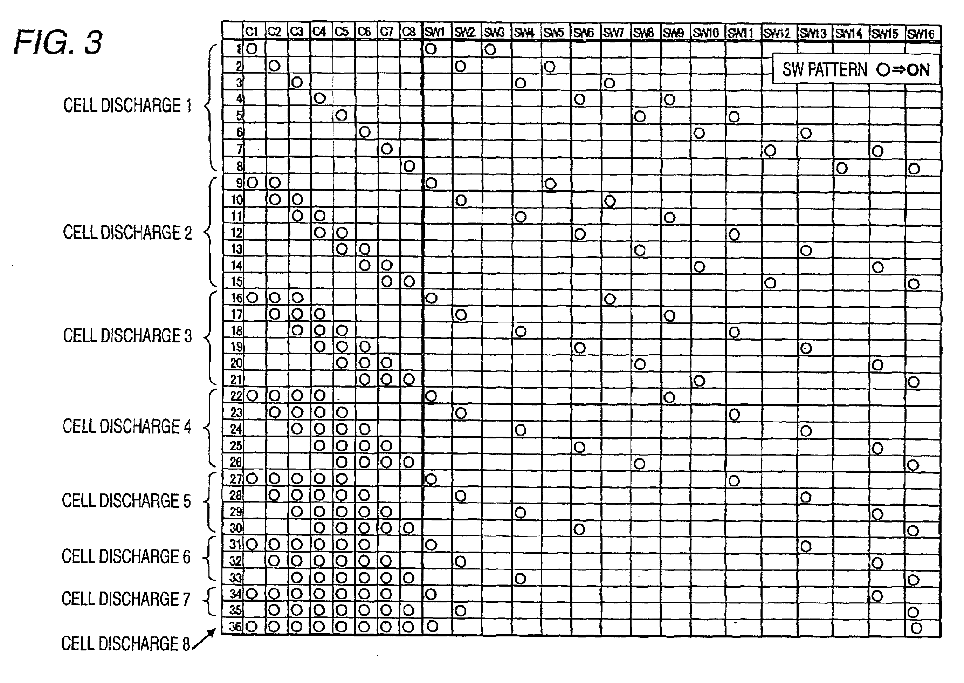

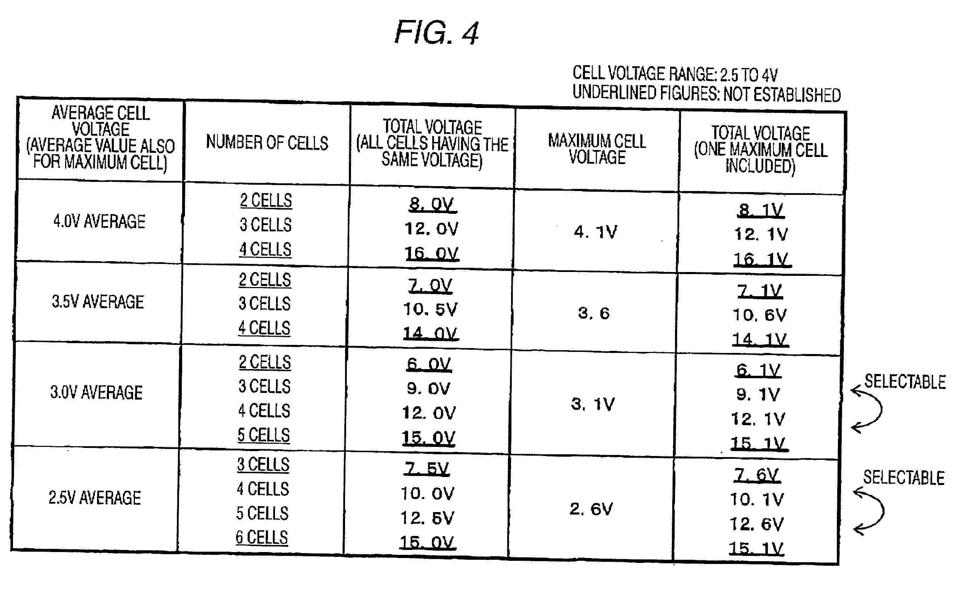

Fig. 2 is a circuit diagram showing the electric storage pack 100 of the first embodiment which has eight cells C1 to C8. Fig. 3 is a diagram showing cell discharges to the electric storage pack shown in Fig. 2 and an on/off pattern of switches. Fig. 4 is a diagram showing a relationship between a single cell's output voltage, the number of discharge cells, a maximum cell voltage and a discharge voltage. In the case of the electric storage pack 100 shown in Fig. 2, the control unit 121 performs on/off controls of the switches SW1 to SW2n, which will be described below, in accordance with detection results by the voltage detection units S1 to Sn.

Hereinafter, on/off controls by the control unit 121 possessed by the electric storage pack 100 of the first embodiment will be described in detail separately with respect to "group setting," "different group setting "group selection," and "group switching."

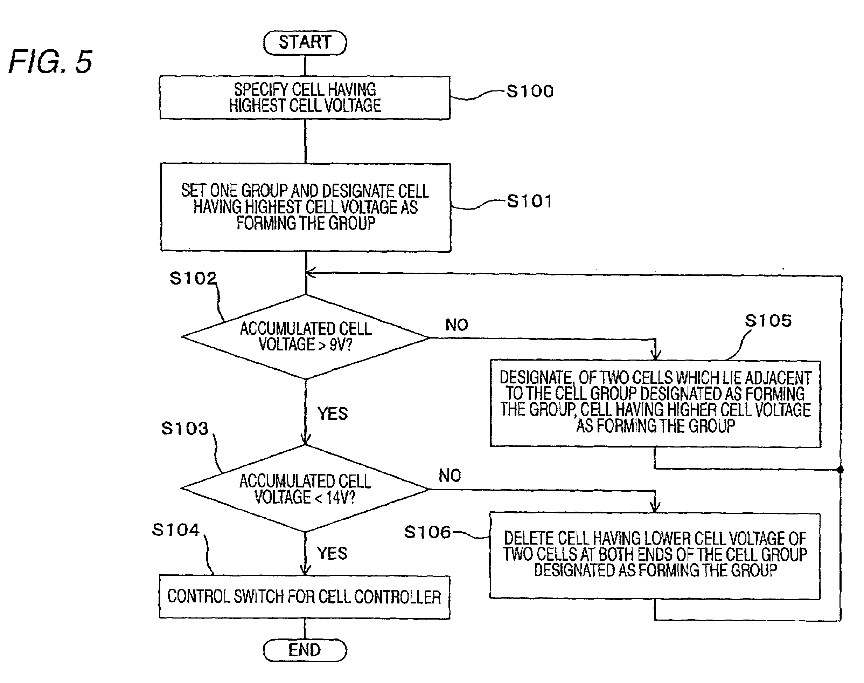

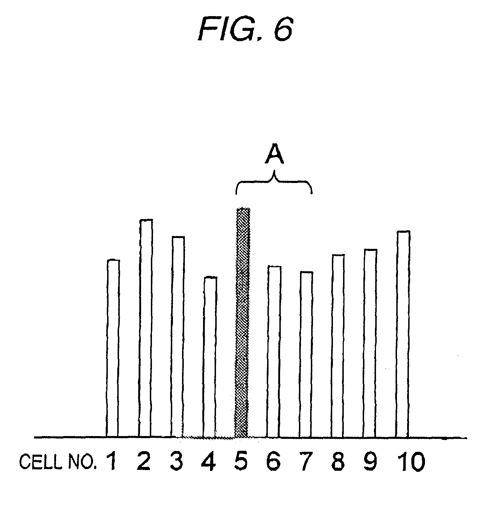

Firstly, a group setting by the control unit 121 according to the first embodiment will be described by reference to Figs. 5 and 6. Fig. 5 is a flowchart illustrating a group setting operation by the control unit 121 which is possessed by the electric storage pack 100 of the first embodiment. In addition, Fig. 6 is a diagram showing an example of cell voltages of the cells which are installed in the electric storage pack 100. In the example shown in Fig. 6, the electric storage pack 100 has 10 cells.

As is shown in Fig. 5, at step S100, the control unit 121 specifies a cell in the cells installed in the electric storage pack 100 which has a highest cell voltage, based on the cell voltages of the cells. Namely, the control unit 121 specifies a cell having a highest SOC. Next, at step S101, the control unit 121 designates the cell having the highest cell voltage as forming a group. Next, at step S102, the control unit 121 determines whether or not an accumulation of cell voltages of cells designated as forming the group is larger than 9V. If the accumulated cell voltage is larger than 9V, the group setting operation proceeds to step S103, where the control unit 121 determines whether or not the accumulated cell voltage is less than 14V. If the accumulated cell voltage is less than 14V, the group setting operation proceeds to step S104, where the control unit 121 on/off controls the switches of the discharge control unit 111 so as to establish a discharge line from the cell designated as forming the group to the electric motor 109.

If the result of the determination at step S102 determines that the accumulated cell voltage is equal to or smaller than 9V, the group setting operation proceeds to step S105. At step S105, the control unit 121 designates, of two cells which lie adjacent to a group of cells which is designated as the group, a cell having a higher cell voltage as forming the same group, and thereafter, the group setting operation returns to step S102. In addition, if the result of the determination at step S103 determines that the accumulated cell voltage is equal to or larger than 14V, the group setting operation proceeds to step S106. At step S106, the control unit 121 designates, of two cells which lie at both ends of the group of cells which is designated as forming the group, a cell having a lower cell voltage as a cell to be excluded from the group, and thereafter, the group setting operation returns to step S102.

Note that in the group setting described above, it is desirable to have fewer cells within one group. For example, in the case of a cell voltage being 3.0V shown in Fig. 4, the number of cells to be designated as forming the group may be three or four. In such a case, the control unit 121 designates three cells as forming the group. In the event that the number of cells designated as forming the group is small, the cell voltage uniforming time can be increased.

In addition, the control unit 121 may select the number of cells that are designated as forming a group in accordance with variation in cell voltage (a difference between a maximum cell voltage and a minimum cell voltage). Namely, the control unit 121 designates a larger number of cells when the variation is small, while selecting a smaller number of cells when the variation is large. For example, in the case of the cell voltage of 3.0V shown in Fig. 4, the number of cells to be designated as forming a group may be three or four. In a case like this, the control unit 121 compares the range of variation with a threshold, and when the variation range is less than the threshold, the control unit 121 designates four cells, while designating three cells when the variation range is equal to or more than the threshold.

Hereinafter, a case will be described in which the group setting based on the flow described by reference to Fig. 5 is performed on a electric storage pack which has cell voltages shown in Fig. 6. The control unit 121 firstly designates a cell 5 having a highest cell voltage as forming a group and thereafter determines whether or not the cell voltage of the cell 5 is larger than 9V. If the cell voltage of the cell 5 is equal to or smaller than 9V, the control unit 121 designates, of two cells 4, 6 which lie adjacent to the cell 5, the cell 6 having a higher cell voltage as forming the group. Next, the control unit 121 determines whether or not an accumulation of cell voltages of the cells 5, 6 is larger than 9V. The accumulated cell voltage of the cells 5, 6 is equal to or smaller than 9V, the control unit 121 designates, of two cells 4, 7 which lie adjacent to the cell group (cells 5, 6), the cell 7 having a larger cell voltage as forming the group.

Next, the control unit 121 determines whether or not an accumulated cell voltage of the cells 5 to 7 is larger than 9V. If the accumulated cell voltage of the cells 5 to 7 is larger than 9V, the control unit 121 determines whether or not the accumulated cell voltage of the cells 5 to 7 is smaller than 14V. If the accumulated cell voltage of the cells 5 to 7 is smaller than 14V, the control unit 121 sets the cells 5 to 7 into one group and then on/off controls the switches of the discharge switch unit 111 so that a discharge line is formed from the cells 5 to 7 to the electric motor 109.

If an accumulated cell voltage of the cells 4 to 7 is equal to or larger than 14V in such a state that the cells 4 to 7 are set into one group, the control unit 121 designates, of the two cells lying at both ends of the cells 4 to 7 which are designated as forming the group, the cell 4 having a lower cell voltage as a cell to be excluded from the group.

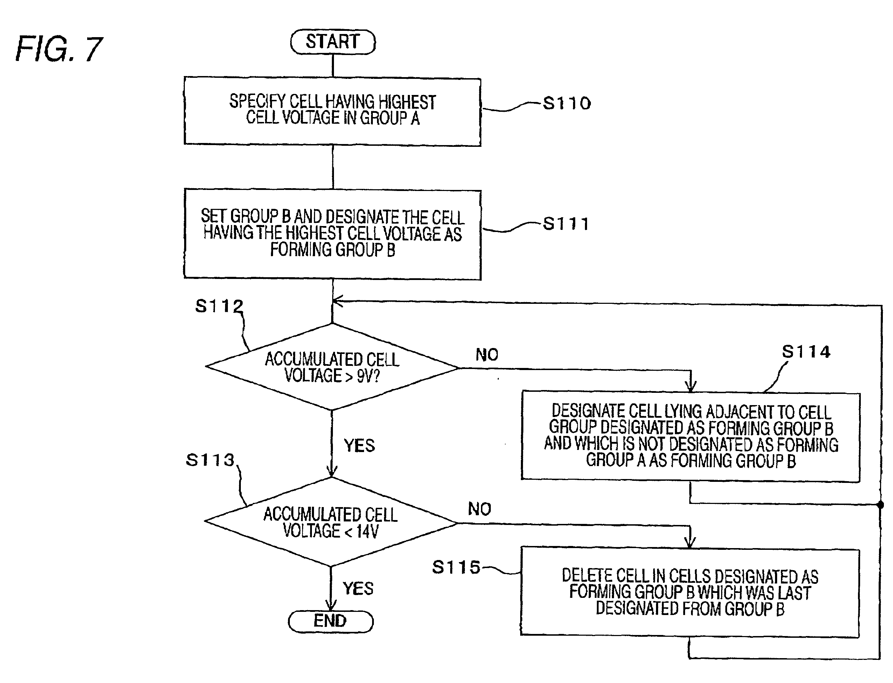

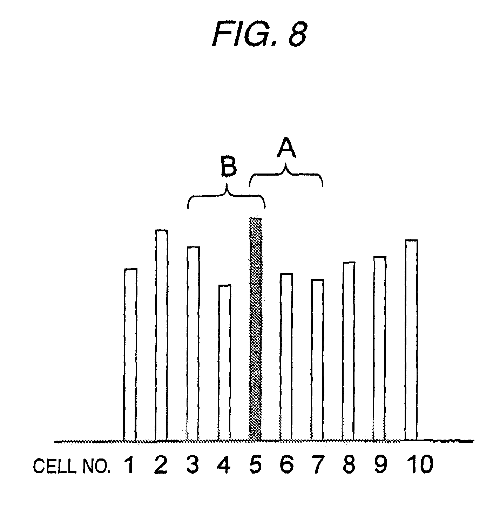

Next, a different group setting by the control unit 121 of the first embodiment will be described by reference to Figs. 7 and 8. Fig. 7 is a flowchart illustrating a different group setting operation by the control unit 121 possessed by the electric storage pack 100 of the first embodiment. In addition, Fig. 8 is a diagram showing an example of cell voltages of cells which are installed in the electric storage pack 100 of the first embodiment. In the example shown in Fig. 8, the electric storage pack 100 has 10 cells. Note that the description will be starting from a state in which the cells 5 to 7 within the electric storage pack 100 shown in Fig. 8 have been set into the group A as a result of the group setting that has been described by reference to Fig. 5.

As is shown in Fig. 7, at step S110, the control unit 121 specifies the cell (the cell 5) having the highest cell voltage or highest SOC in the group A. Next, at step S111, the control unit 121 sets a different group B which differs from the group A and designates the cell having the highest cell voltage as forming the group B. Next, at step S112, the control unit 121 determines whether or not an accumulation of cell voltages of the cells which are designated as forming the group B is larger than 9V. If the accumulated cell voltage is larger than 9V, the different group setting operation proceeds to step S113, where the control unit 121 determines whether or not the accumulated cell voltage is smaller than 14V. If the accumulated cell voltage is smaller than 14V, the setting of the group P ends.

If the result of the determination at step S112 determines that the accumulated cell voltage of the group B is equal to or smaller than 9V, the different group setting operation proceeds to step S114. At step S114, the control unit 121 designates a cell which lies adjacent to the cell group which is designated as the group B and is not designated as forming the group A as forming the group B and thereafter the different group setting operation returns to step S112. In addition, the result of the determination at step S113 determines that the accumulated cell voltage of the group B is equal to or larger than 14V, the different group setting operation proceeds to step S115. At step S115, the control unit 121 designates the cell of the cells designated as forming the group B which was last designated as forming the group B as a cell that is to be excluded from the group B, and thereafter, the different group setting operation returns to step S112.

Hereinafter, a case will be described in which the different group setting based on the flow described by reference to Fig. 7 is performed on a electric storage pack having cell voltages shown in Fig. 8. The control unit 121 specifies the cell 5 having the highest cell voltage in the group A and designates this cell 5 as forming the group B. Next, the control unit 121 determines whether or not the cell voltage of the cell 5 is larger than 9V. In the cell voltage of the cell 5 is equal to or smaller than 9V, the control unit 121 designates the cell 4 which is adjacent to the cell 5 and is not designated as forming the group A as forming the group B. Next, the control unit 121 determines whether or not an accumulation of the cell voltages of the cells 5, 4 is larger than 9V. If the accumulated cell voltage of the cells 5, 4 is equal to or smaller than 9V, the control unit 121 designates a cell 3 which lies adjacent to the cell group (the cells 5, 4) forming the group B and which is not designated as forming the group A as forming the group B.

Next, the control unit 121 determines whether or not an accumulated cell voltage of the cells 5, 4, 3 is larger than 9V. If the accumulated cell voltage of the cells 5, 4, 3 is larger than 9V, the control unit 121 then determines whether or not the accumulated cell voltage of the cells 5, 4, 3 is smaller than 14V. If the accumulated cell voltage of the cells 5, 4, 3 is smaller than 14V, the control unit 121 sets the cells 5, 4, 3 into the group B which is different from the group A. If the accumulated cell voltage of the cells 5, 4, 3 is equal to or larger than 14V, the control unit 121 designates the cell 3 which was last designated as forming the group B in the cells 5, 4, 3 as a cell that is to be excluded form the group B.

Next, a group selection by the control unit 121 of the first embodiment will be described by reference to Fig. 8. The control unit 121 specifies the cells having the smallest cell voltages respectively from the groups A and B which are set by the flows illustrated in Figs. 5 and 7. In the example shown in Fig. 8, the cell 7 is the cell having the smallest cell voltage in the group A, and the cell 4 is the cell having the smallest cell voltage in the group B. The control unit 121 does not select the group designated a cell having the smallest cell voltage in the cells installed in the electric storage pack 100. In the example shown in Fig. 8, since the cell 4 is the cell having the smallest cell voltage in the cells installed in the electric storage pack 100 of the first embodiment, the control unit 121 does not select the group B but selects the group A.

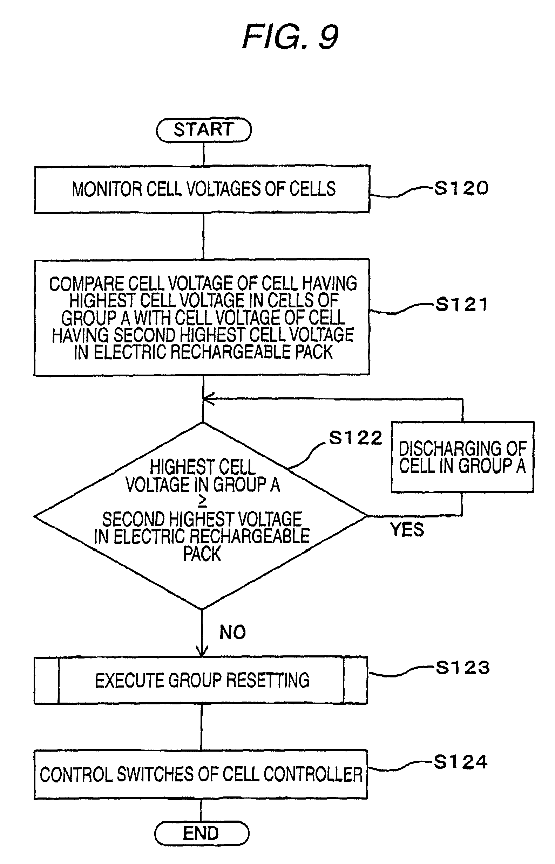

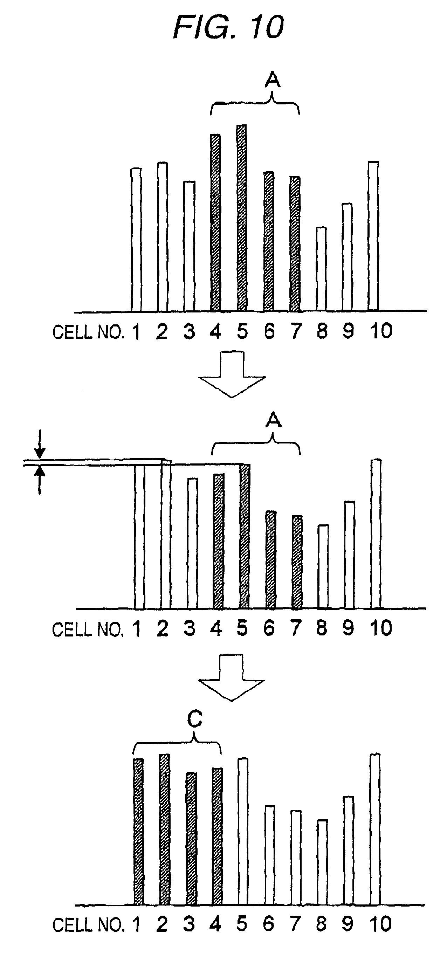

Next, a first group switching by the control unit 121 of the first embodiment will be described by reference to Figs. 9 and 10. Fig. 9 is a flowchart illustrating a first group switching by the control unit 121 possessed by the electric storage pack 100 of the first embodiment. In addition, Fig. 10 is a diagram showing an example of cell voltages of cells installed in the electric storage pack 100 of the first embodiment. In the example, shown in Fig. 10, the electric storage pack 100 has 10 cells. Note that the description will be starting from a state in which a discharge line is established from the cells 4 to 7 (the group A) to the electric motor 109.

As is shown in Fig. 9, at step S120, the control unit 121 monitors cell voltages of the cells that are obtained from voltage detection units S1 to S10. As a result of discharge from the cells 4 to 7, the cell voltages of those cells drop while keeping their existing relationship with respect to magnitude. At step S121, the control unit 121 compares the cell voltage of the cell 5 having a highest cell voltage in the cells 4 to 7 which are designated as forming the group A with the cell voltage of the cell 2 having a second highest cell voltage in the cells installed in the electric storage pack 100. Next, at step S122, the control unit 121 determines whether or not the cell voltage of the cell 5 is equal to or larger than the cell voltage of the cell 2. The control unit 121 executes the group setting which has been described by reference to Fig. 5 again at a point in time at which the cell voltage of the cell 5 becomes lower than the cell voltage of the cell 2 as a result of discharge from the cells 4 to 7 which are designated as forming the group A (step S123). As a result of this, after having set a group C shown in Fig. 10, the control unit 121 on/off controls the switches of the discharge switch unit 11 in such a manner as to open the line from the cells designated as forming the group A to the electric motor 109 while closing a line from the cells designated as forming the group C to the electric motor 109.

In addition, at step S122, while whether or not the cell voltage of the cell 5 is equal to or larger than the cell voltage of the cell 2 is determined and the groups are switched at the point in time at which the cell voltage of the cell 5 becomes lower than the cell voltage of the cell 2, a hysteresis may be provided in switching the groups. Namely, switching to the different group is not implemented at a instant point in time at which the cell voltage of the cell 5 becomes lower than the cell voltage of the cell 2, but is implemented at a point in time at which the cell voltage of the cell 5 becomes smaller than a value which results from subtracting an overshoot value from the cell voltage of the cell 2. Because of this, since in the event that the overshoot value is large, the number of times of switching the groups is reduced, a smooth control results, and in the event that the overshoot value is small, the residual capacities can be made uniform by frequent group switchings.

In the first group switching that has been described above, while the cell voltage of the cell in the cells designated as forming the group which has the highest cell voltage is compared with the cell voltage of the cell in the cells installed in the electric storage pack 100 which has the second highest cell voltage, as a second group switching, the groups may be switched in accordance with a result of a comparison between a lowest cell voltage in the cells designated as forming the group and a lowest cell voltage in the cells installed in the electric storage pack 100.

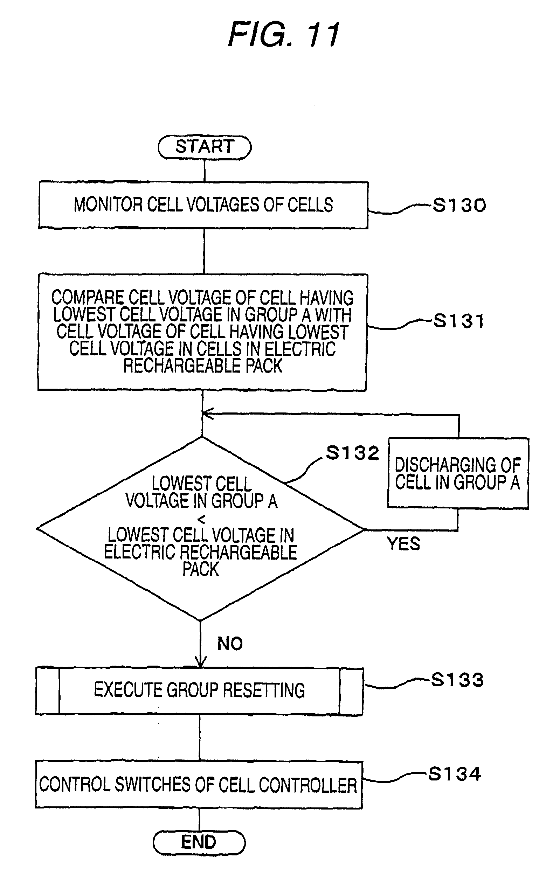

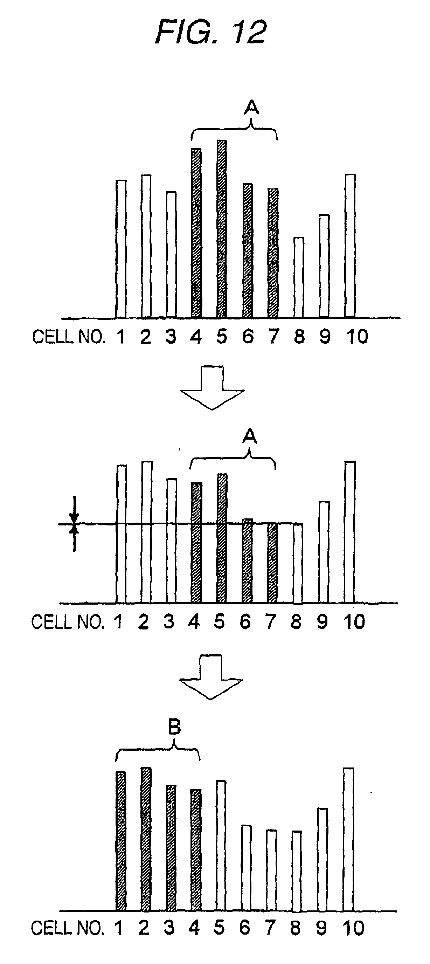

Hereinafter, the second group switching by the control unit 121 of the first embodiment will be described by reference to Figs. 11 and 12. Fig. 11 is a flowchart illustrating the second group switching by the control unit 121 possessed by the electric storage pack 100 of the first embodiment. In addition, Fig. 12 shows an example of cell voltages of cells which are installed in the electric storage pack 100 of the first embodiment. In the example shown in Fig. 12, the electric storage pack 100 has 10 cells. Note that the description will be starting from a state in which a discharge line from cells 4 to 7 (a group A) in the electric storage pack 100 shown in Fig. 12 to the electric motor 109.

As is shown in Fig. 11, at step S130, the control unit 121 monitors cell voltages of cells which are obtained from voltage detection units S1 to S10. As a result of discharge from the cells 4 to 7, the cell voltages of those cells drop while keeping their existing relationship with respect to magnitude. At step S131, the control unit 121 compares the cell voltage of the cell 7 having a lowest cell voltage in the cells 4 to 7 which are designated as forming the group A with the cell voltage of the cell 8 having a lowest cell voltage in the cells installed in the electric storage pack 100. Next, at step S132, the control unit 121 determines whether or not the cell voltage of the cell 7 is equal to or smaller than the cell voltage of the cell 8. The control unit 121 executes the group setting which has been described by reference to Fig. 5 again at a point in time at which the cell voltage of the cell 7 becomes equal to the cell voltage of the cell 8 as a result of discharge from the cells 4 to 7 which are designated as forming the group A (step S133). As a result of this, after having set a group B shown in Fig. 12, at step S134, the control unit 121 on/off controls the switches of the discharge switch unit 111 in such a manner as to open the line from the cells designated as forming the group A to the electric motor 109 while closing a line from the cells designated as forming the group B to the electric motor 109.

By executing the second group switching, it becomes possible to prevent the generation of a cell having a cell voltage which is lower than the lowest cell voltage in the cells installed in the electric storage pack 100.

The on/off control by the control unit 121 that has been described heretofore may include functions which will be described later.

### <Increase/Decrease in Cell Number Matching Electric Power Demand from Load>

While this embodiment has been described using the cooling fan electric motor 109 as the example of the rotary induction load which consumes electric power discharged from the electric storage pack 100, the load consuming the electric power from the electric storage pack 100 is not limited to the cooling fan electric motor 109 but may be an auxiliary such as a coolant pump electric motor and a blower electric motor of an air cleaner or a feeding circuit for feeding a capacity variable load such as a hot wire or a lamp. However, since required electric power differs depending on auxiliaries, the control unit 121 changes the threshold used at steps S102, S103 in the flowchart shown in Fig. 5 and the threshold used at steps S112, S113 in the flowchart shown in Fig. 7 depending upon required electric power.

For example, since the electric motor 109 requires a driving voltage of 8 to 14V, the groups are set in such a manner that their accumulated voltage falls within the range of 8 to 14V. However, when driving an auxiliary which requires a driving voltage of 11 to 17V, the control unit 121 selects the cells which are to be designated as forming the groups in such a manner that their accumulated cell voltage falls within the range of 11 to 17V. In addition, the control unit 121 may change the thresholds in accordance with a quantity of air produced by the cooling fan driven by the electric motor 109.

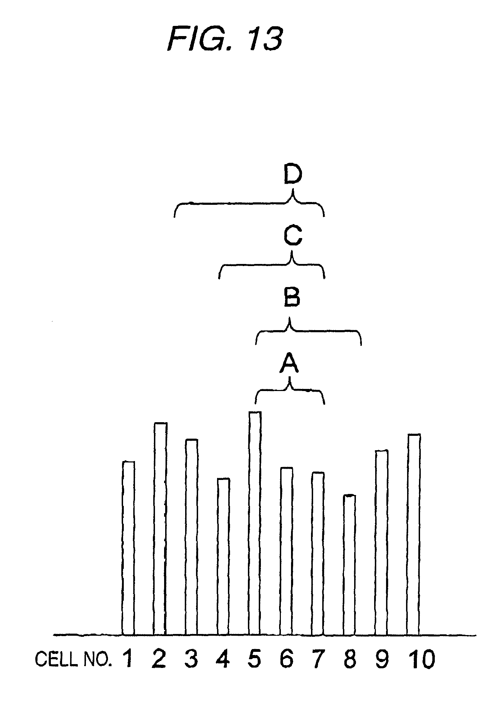

Fig. 13 is a diagram showing an example of cell voltages of cells which are installed in the electric storage pack 100 and groups A to D. The control unit 121 selects one of the groups A, C, D in accordance with electric power required by the load. Since a cell having a smallest cell voltage is included in the group B, the group B is excluded from the object groups to be selected.

### <Addition of Cell in Association with Reduction in Cell Voltage>

The cell voltages of the cells which have carried out the discharge of required electric power drop. Since electric power to be supplied to the load is reduced when the cell voltages are reduced, there can be caused a situation in which electric power required by the load cannot be supplied. Because of this, when the cell voltages are reduced, a cell is added to the group which is discharging so that the cell also discharges so as to secure electric power to be supplied to the load. The cell to be added is a cell having a higher cell voltage of two cells which lie adjacent to the group of cells which are designated as forming the group.

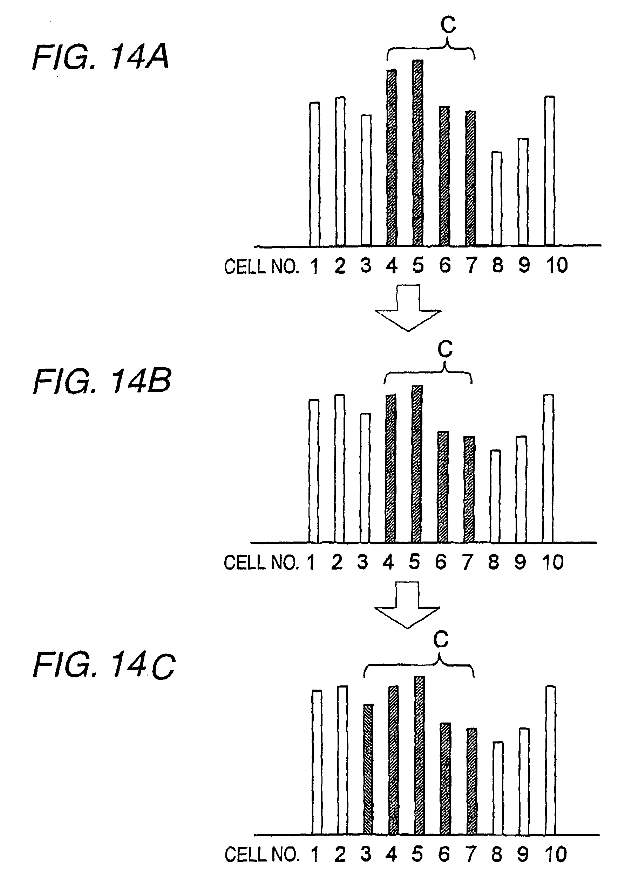

Fig. 14 is a diagram showing an example of cell voltages of cells installed in the electric storage pack 100. As is shown in Fig. 14, electric power discharged from cells 4 to 7 which are designated as forming the group C is supplied to, for example, a load which requires a driving voltage of 10 to 15V. When an accumulated cell voltage of the cells 4 to 7 is reduced as a result of discharge to 11.3V from a state shown in Fig. 14A in which the accumulated cell voltage of the cells 4 to 7 is 13.7V, the control unit 121 adds, of two cells 3, 8 which lie adjacent to the cells 4 to 7, the cell 3 having a higher cell voltage to the group C. When the cell voltage of the cell 3 is 2.8V, an accumulated cell voltage of the cells 3 to 7 becomes 14.1V, and therefore, the state can be maintained in which sufficient electric power can be supplied to the load.

As has been described heretofore, according to the electric storage pack 100 of the embodiment, electric power discharged from the cells by the on/off control of the switches of the discharge switch unit 111 by the control unit 121 is used to drive the electric motor 109. In this way, electric power that is transformed into heat at the resistors in the conventional electric storage pack is used effectively. In addition, while electric power is supplied from the battery 17 to the electric motor 109 in the conventional electric storage pack, in this embodiment, electric power discharged from the cells is supplied to the electric motor 109. Because of this, power consumption from the battery 17 can be reduced. As has been described above, the battery 17 is charged with electric power from the electric storage pack 100 which is reduced in voltage by the DC-DC converter 15, and power loss is generated at the DC-DC converter 15. Because of this, the reduction in consumption of electric power from the battery 17 can indirectly realize a reduction in consumption of electric power from the electric storage pack 100.

In addition, when comparing the speed at which electric power discharged from the cells is transformed into heat in the resistors with the speed at which the electric power is consumed in the electric motor 109, the speed at which the electric power is consumed in the electric motor 109 is faster markedly. Thus, the discharging time can be shortened compared with the conventional electric storage pack. Furthermore, when comparing the heat value resulting when electric power discharged from the cells is transformed into heat in the resistors with the heat value resulting when the electric power is consumed in the electric motor 109, the heat value resulting when the electric power is consumed in the electric motor 109 is smaller markedly. Consequently, the high level of countermeasures taken against heat in the conventional electric storage pack does not have to be taken any more, and the integrated circuit made up of the discharge switch unit 111, the voltage detection units S1 to Sn and the control unit 121 is little affected by heat.

In addition, when comparing the electric storage pack 10 shown in Fig. 23 is compared with the electric storage pack 100 of the embodiment, although the number of switches is larger in the electric storage pack 100 of the embodiment than in the one shown in Fig. 23, since the discharge switch unit 111 is realized by the integrated circuit and no resistor is provided in the electric storage pack of the embodiment, there is imposed almost no effect on the cost of the electric storage pack by the increase in the number of switches. On the contrary, due to no resistor being involved, a reduction in cost of the electric storage pack can be realized.

### (Second Embodiment)

While in the first embodiment, the continuous discharge line is formed from at least one cell to the cooling fan electric motor 109 which is the rotary induction load by the on/off control of the switches SW1 to SW2n by the control unit 121, in a second embodiment, a discharge line is formed from a cell of cells installed in a electric storage pack 100 which has a highest cell voltage to an electric motor 109. Although a relationship between the electric storage pack, part of an electric drive system and auxiliaries is substantially the same as that of the first embodiment shown in Fig. 1, a control unit possessed by the electric storage pack performs a different on/off control of switches SW1 to SW2n from the on/off control performed by the control unit 121 of the first embodiment.

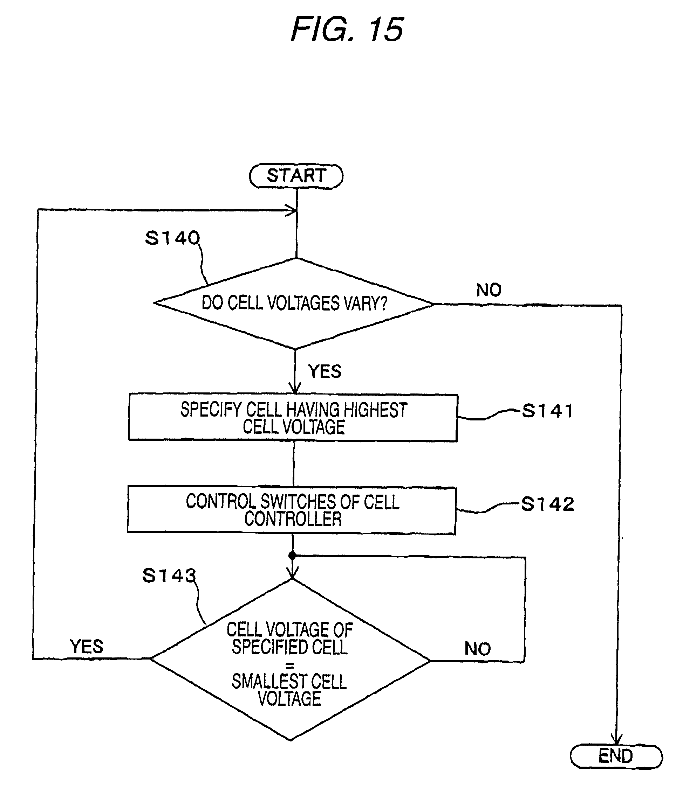

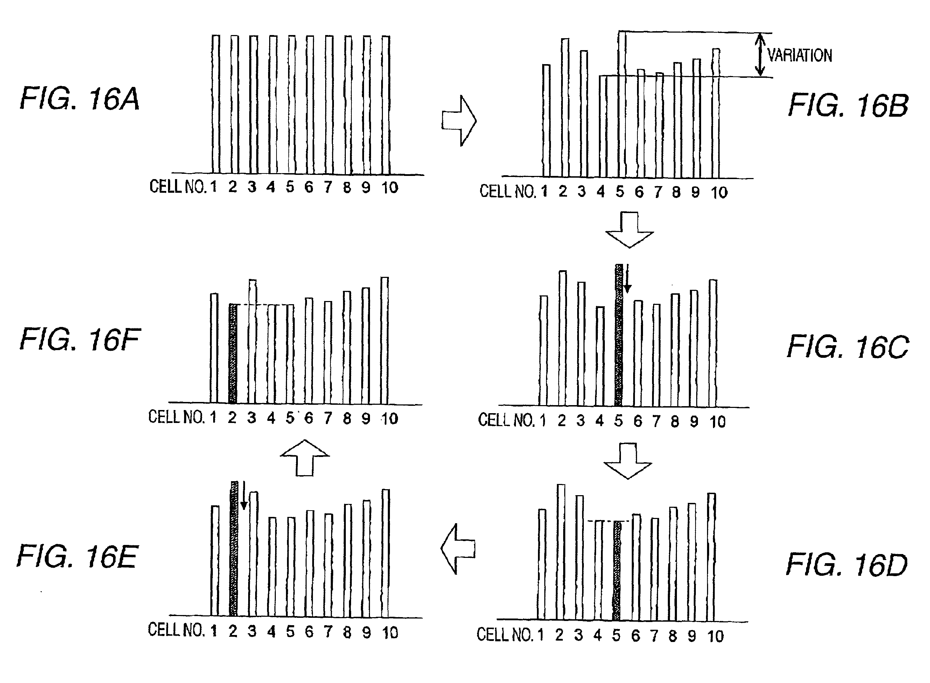

Hereinafter, a discharge control by a control unit of the second embodiment will be described by reference to Figs. 15 and 16. Fig. 15 is a flowchart illustrating the discharge control by the control unit of the second embodiment. Fig. 16 is a diagram showing an example of cell voltages of cells which are installed in a electric storage pack of the second embodiment. In the example shown in Fig. 16, the electric storage pack has 10 cells.

As is shown in Fig. 15, at step S140, the control unit determines whether or not cell voltages of cells installed in the electric storage pack 100 vary based on the cell voltages of the cells which are obtained from voltage detection units S1 to Sn. If the cell voltages vary, the discharge control operation proceeds to step S141, where the control unit specifies a cell in the cells installed in the electric storage pack which has a highest cell voltage, that is, a cell having a highest SOC. Next, at step S142, the control unit on/off controls switches of a discharge switch unit 111 so that a discharge line is formed from the cell specified at step S141 as having the highest cell voltage to an electric motor 109.

When the discharge line is formed, since electric power is discharged from the cell specified at step S141 to the electric motor 109, the cell voltage of the cell drops. Next, at step S143, the control unit determines whether or not the cell voltage of the cell specified at step S141 is equal to a cell voltage of a cell in the cells installed in the electric storage pack 100 which has a lowest cell voltage. When the cell voltage of the cell specified at step S141 drops to be equal to the smallest cell voltage, the discharge control operation returns to step S140.

Hereinafter, a case will be described in which the discharge control based on the flow described by reference to Fig. 15 is performed on the electric storage pack having the cell voltages shown in Fig. 16. Firstly, when the cell voltages of the cells installed in the electric storage pack has changed from a state shown in Fig. 16A in which there is no variation in cell voltage to a state shown in Fig. 16B in which the cell voltages vary, the control unit on/off controls the switches in the discharge switch unit 111 so that a discharge line is formed the cell 5 having the highest cell voltage to the electric motor 109. When the discharge line is established from the cell 5 to the electric motor 109, the cell voltage of the cell 5 drops as shown in Fig. 16C.

As shown in Fig. 16D, when the cell voltage of the cell 5 drops to a cell voltage of a cell 4 having a lowest cell voltage in the cells in the electric storage pack, the control unit cancels the discharge line from the cell 5 to the electric motor 109 and on/off controls the switches in the discharge switch unit 111 so as to form a discharge line from a cell 2 having a highest cell voltage in this state to the electric motor 109. When the discharge line is formed from the cell 2 to the electric motor 109, as shown in Fig. 16(e), the cell voltage of the cell 2 drops. The control unit maintains this discharge line until the cell voltage of the cell 2 drops to the cell voltage of the cell 4 which has the lowest cell voltage as shown in Fig. 16(f).

In this way, the control unit of the second embodiment continues to control the switching of discharge lines from the respective cells to the electric motor 109 until the respective cell voltages of the cells installed in the electric storage pack finally drop to the cell voltage of the cell 4 to thereby eliminate variations in cell voltage by repeating the discharge control described above.

### (Third Embodiment)

A third embodiment is identical to the second embodiment in that a discharge line is formed from a cell having a highest cell voltage in cells installed in a electric storage pack 100 to an electric motor 109 but is different therefrom in timing at which discharge lines are switched. Namely, while in the second embodiment, discharge continues until the cell voltage of the discharging cell drops to the cell voltage of the cell having the lowest cell voltage in the cells installed in the electric storage pack, in the third embodiment, discharge continues until the cell voltage of a discharging cell drops to be a voltage resulting from subtraction of a predetermined voltage from the cell voltage of a cell having a second highest cell voltage in the cells in the electric storage pack.

Although a relationship between the electric storage pack of the third embodiment, part of an electric drive system and auxiliaries is substantially the same as that of the first embodiment shown in Fig. 1, a control unit possessed by the electric storage pack of the third embodiment performs a different on/off control of switches SW1 to SW2n from those performed by the control unit 121 of the first embodiment and the control unit of the second embodiment.

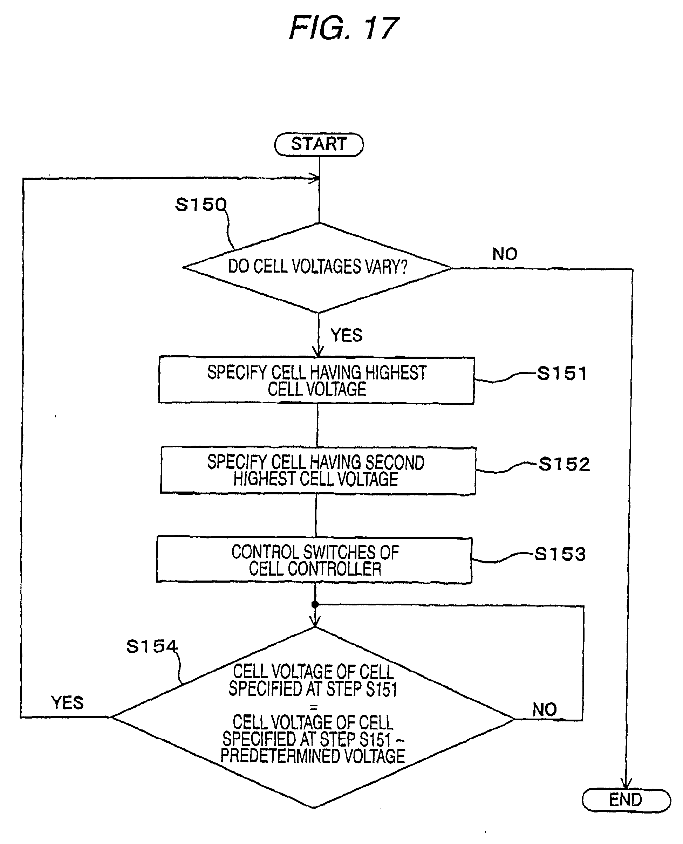

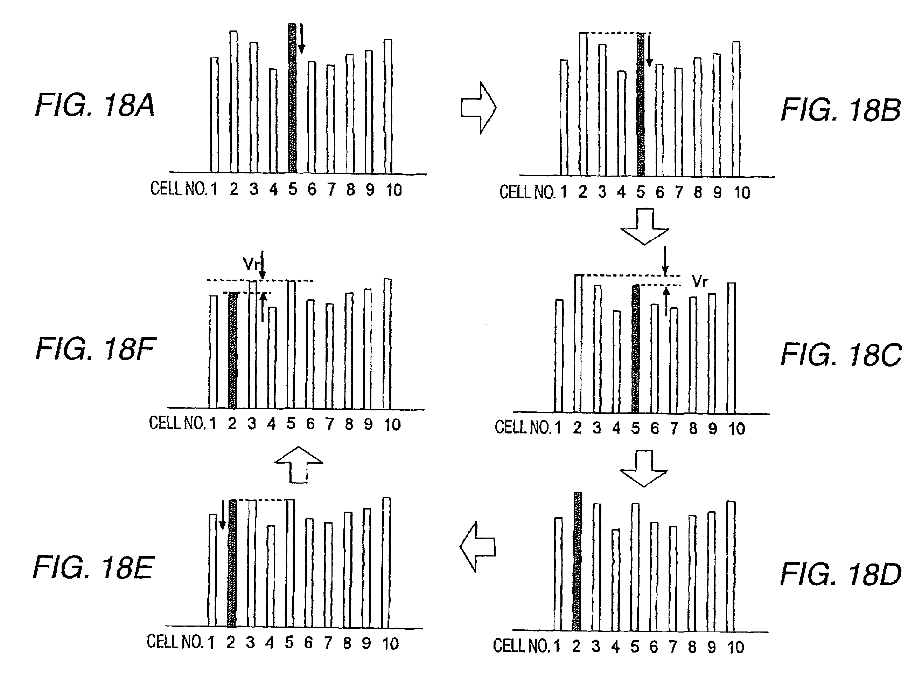

Hereinafter, a discharge control by the control unit of the third embodiment will be described by reference to Figs. 17 and 18. Fig. 17 is a flowchart illustrating a discharge control by the control unit possessed by the electric storage pack of the third embodiment. Fig. 18 is a diagram showing an example of cell voltages of cells installed in the electric storage pack of the third embodiment. In the example shown in Fig. 18, the electric storage pack 10 has 10 cells.

As is shown in Fig. 17, at step S150, the control unit determines whether or not cell voltages of cells installed in the electric storage pack varies based on the cell voltages of the cells obtained from voltage detection units S1 to Sn. If the cell voltages vary, then, the discharge control operation proceeds to step S151, where the control unit specifies a cell having a highest cell voltage or SOC in the cells installed in the electric storage pack. Next, at step S152, the control unit specifies a cell having a second highest cell voltage in the cell installed in the electric storage pack. Following this, at step S153, the control unit on/off controls switches in discharge switch unit 111 so that a discharge line is formed from the cell specified at step S151 as having the highest cell voltage to an electric motor 109.

When the discharge line is formed, electric power is discharged from the cell specified at step S151 to the electric motor 109, the cell voltage of the cell drops. Following this, at step S154, the control unit determines whether or not the cell voltage of the cell specified at step S151 is equal to a voltage resulting from subtraction of a predetermined voltage from the cell voltage of the cell specified at step S152 (hereinafter, referred to as a "reference voltage"). When the cell voltage of the cell specified at step S151 drops to become equal to the reference voltage, the discharge control operation returns to step S150.

Hereinafter, a case will be described in which the discharge control based on the flow described by reference to Fig. 17 is performed on the electric storage pack having the cell voltages shown in Fig. 18. Firstly, when the cell voltages of the cells installed in the electric storage pack changes from a state in which the cell voltages do not vary to a state shown in Fig. 18A in which the cell voltages vary, the control unit on/off controls the switches of the discharge switch unit 111 so as to form a discharge line from the cell 5 having the highest cell voltage to the electric motor 109. When the discharge line is established from the cell 5 to the electric motor 109, the cell voltage of the cell 5 drops as shown in Fig. 18A.

When the cell voltage of the cell 5 drops to the cell voltage of the cell 2 having the second highest cell voltage in the cells installed in the electric storage pack as shown in Fig. 18B and then drops to the reference voltage which results from subtraction of the predetermined voltage Vr from the cell voltage of the cell 1 as shown in Fig. 18C, the control unit cancels the discharge line from the cell 5 to the electric motor 109 and then on/off controls the switches in the discharge switch unit 111 so as to form a discharge line from the cell 2 having now the highest cell voltage in this state to the electric motor 109.

When the discharge line is formed from the cell 2 to the electric motor 109, the cell voltage of the cell 2 drops. The control unit maintains the discharge line so formed until the cell voltage of the cell 2 drops to the cell voltages of a cell 3 and the cell 5 which are having the second highest cell voltage as shown in Fig. 18E and then drops to the reference voltage resulting from subtraction of the predetermined voltage Vr from the cell voltages of the cells 3 and 5 as shown in Fig. 18F.

In this way, the control unit of the second embodiment continues to control the switching of discharge lines from the respective cells to the electric motor 109 until the respective cell voltages of the cells installed in the electric storage pack finally drop to the cell voltage of the cell 4 to thereby eliminate variations in cell voltage by repeating the discharge control described above.

### (Fourth Embodiment)

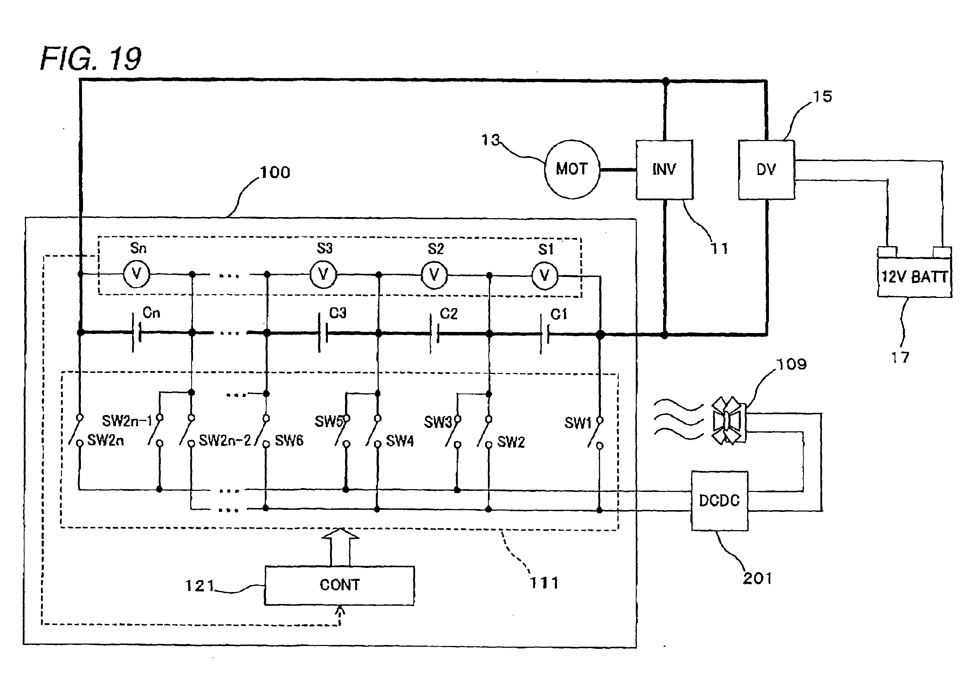

Fig. 19 is a block diagram showing an embodiment in which a DCDC converter is added to the vehicle's interior configuration shown in Fig. 1. A vehicle shown in Fig. 19 includes the electric storage pack 100 of the first embodiment, an inverter 11, a motor 13, a DC-DC converter 15, a battery 17 and an electric motor 109, and a DCDC converter 201. The DCDC converter 201 increases or decreases the discharge voltage of the electric storage pack 100 to a desired voltage level. An extent to which the voltage of the electric storage pack 100 is increased or decreased is determined in accordance with a discharge voltage from cells and a voltage required to drive a load represented by the electric motor 109. According to this embodiment, the extent can flexibly be applied to the discharge voltage from the cells and the load driving voltage.

### (Fifth Embodiment)

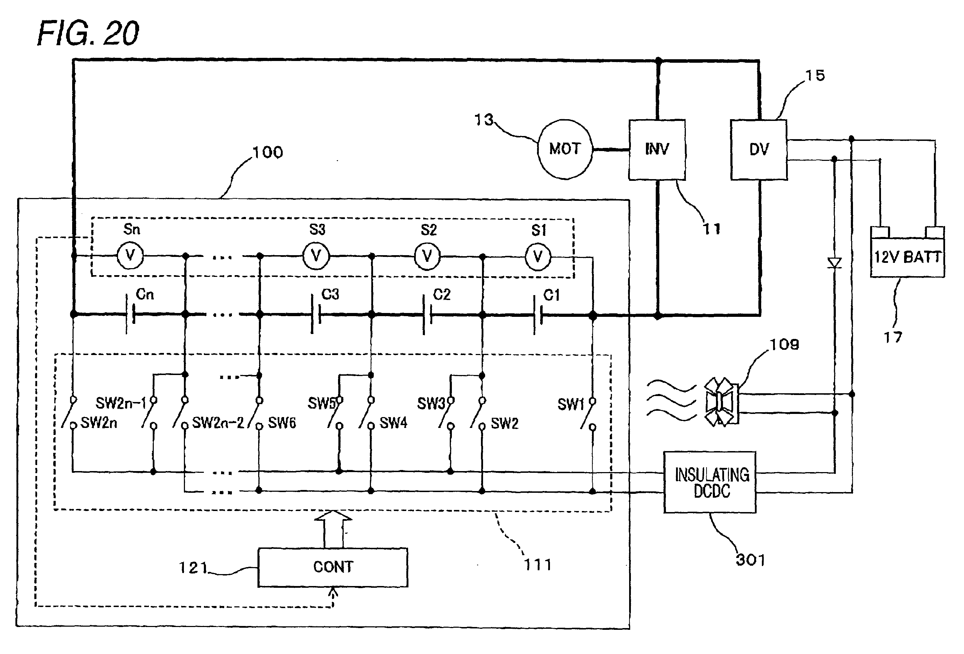

Fig. 20 is a block diagram showing an embodiment in which an insulating DCDC converter is added to the vehicle's interior configuration shown in Fig. 1. A vehicle shown in Fig. 20 includes the electric storage pack 100 of the first embodiment, an inverter 11, a motor 13, a DC-DC converter 15, a battery 17 and an electric motor 109, and an insulating DCDC converter 301. In this embodiment, electric power can be supplied to the electric motor 109 not only by discharge from cells in the electric storage pack 110 but also from the battery 17. As shown in Fig. 20, since the electric storage pack, 100 having a high voltage and the battery 17 having a voltage for auxiliaries are electrically connected to each other via the insulating DCDC converter 301, there occurs no short-circuit between the electric storage pack 100 and the battery 17.

### (Sixth Embodiment)

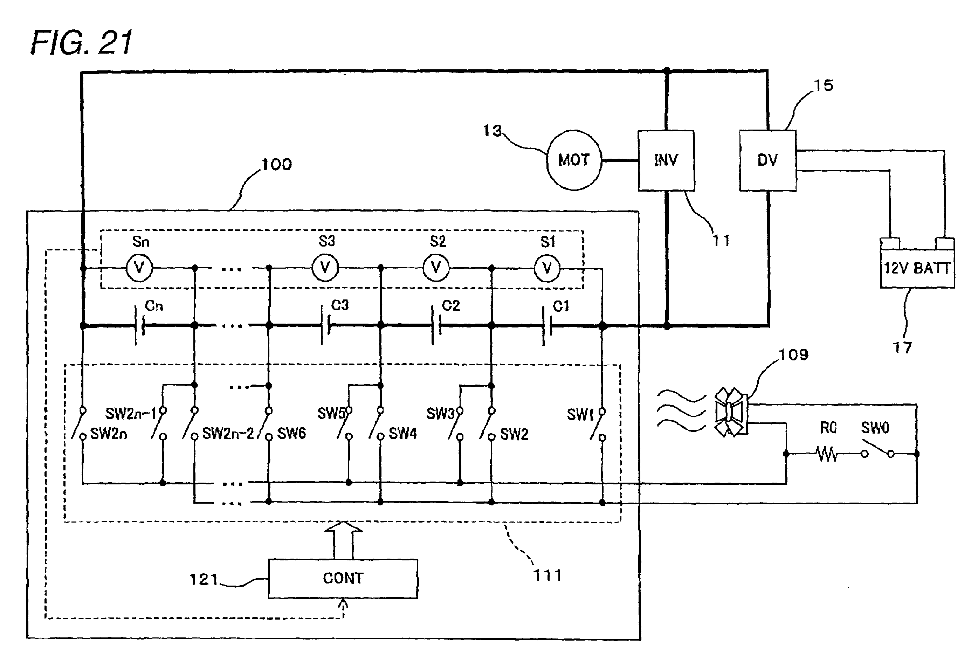

Fig. 21 is a block diagram showing an embodiment in which a resistor and a switch are added to the vehicle's interior configuration shown in Fig. 1. A vehicle shown in Fig. 21 includes the electric storage pack 100 of the first embodiment, an inverter 11, a motor 13, a DC-DC converter 15, a battery 17 and an electric motor 109, and a resistor R0 and SW0. The resistor R0 and the switch SW0 are connected in series and the resistor R0 and the switch SW0 are connected to the electric motor 109 in parallel. The switch SW0 is on/off controlled by a control unit 121 in an interior of the electric storage pack 100. The control unit 121 closes the switch SW0 when the discharge voltage of the electric storage pack 100 is less than a voltage required to drive the electric motor 109.

For example, since when only one cell needs to discharge, the discharge voltage of the electric storage pack 100 does not reach a voltage needed to drive the electric motor 109, the electric motor 9 is not driven. As this occurs, no cell discharge by the electric motor 19 is carried out. However, since the resistor R0 is connected to the electric motor 109 in parallel, discharge current flows to the resistor R0 when the control unit 121 closes the switch SW0. Consequently, when the discharge voltage of the electric storage pack 100 does not reach the voltage needed to drive the electric motor 109, the cell discharge by the resistor R0 can be performed.

In addition, the resistor R0 of the embodiment may be a variable resistor. In the case of a variable resistor being used as the resistor R0, the control unit 121 adjusts a resistance value of the variable resistor in accordance with a level of discharge voltage of the electric storage pack 100. In addition, the embodiment may take a form in which a plurality of sets of the resistor R0 and the switch SW0 may be provided parallel, each set having a different resistance value. In this case, the control unit closes a switch for the set selected based on the level of discharge voltage of the electric storage pack 100.

### (Seventh Embodiment)

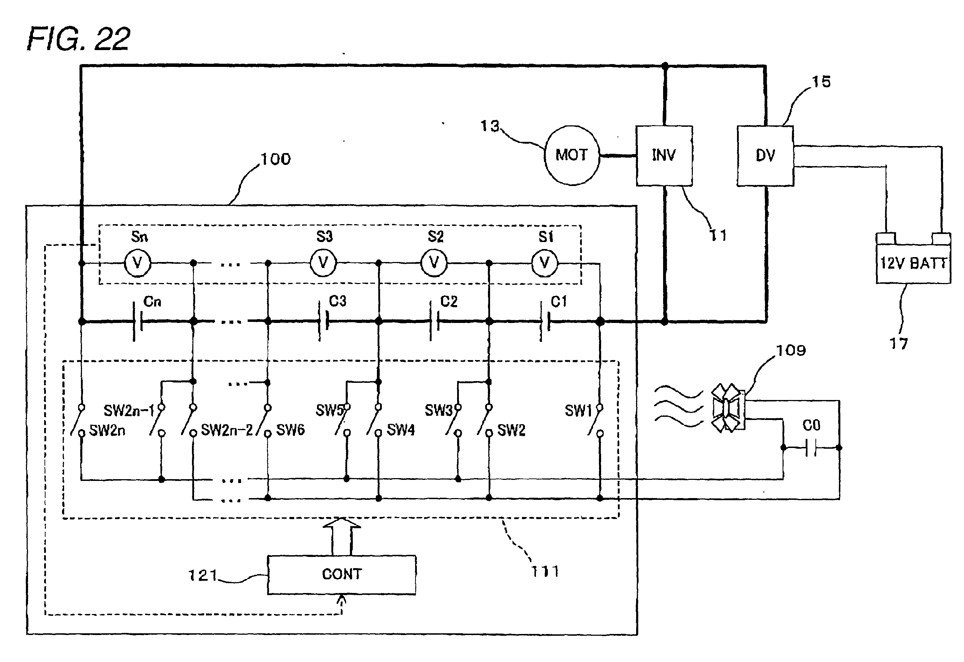

Fig. 22 is a block diagram showing an embodiment in which a capacitor is added to the vehicle's interior configuration shown in Fig. 1. A vehicle shown in Fig. 22 includes the electric storage pack 100 of the first embodiment, an inverter 11, a motor 13, a DC-DC converter 15, a battery 17 and an electric motor 109, and a capacitor C0. The capacitor C0 is connected to the electric motor 109 in parallel. Therefore, the discharge voltage of the electric storage pack 100 is applied to both ends of the capacitor C0. Energy stored in the capacitor C0 is supplied to the electric motor 109 when the discharge voltage of the electric storage pack 100 is zero or the discharge voltage of the electric storage pack 100 is low. Consequently, the supply of electric power to the electric motor 109 is not interrupted even when a control unit 121 in the electric storage pack 100 carries out a switch changeover, whereby electric power can be supplied continuously to the electric motor 109. In addition, electric power can be supplied stably to the electric motor 109 without being affected largely by a change in level of discharge voltage of the electric storage pack 100.

According to the first to eleventh aspects of the invention, since electric power discharged from the electric rechargeable cells for the purpose of making uniform the cell voltages thereof, energy stored in the electric storage pack can be consumed with good efficiency.
While the invention has been described in connection with the exemplary embodiments, it will be obvious to those skilled in the art that various changes and modifications may be made therein without departing form the present invention, and it is aimed, therefore, to cover in the appended claim all such changes and modifications as fall within the true spirit and scope of the present invention.

## Claims

1. A discharge control system for a electric storage pack which has a plurality of electric rechargeable cells connected in series and a feeding circuit for driving a load which the feeding circuit is connected to discharge lines from the electric rechargeable cells, said system comprising:
a plurality of cell voltage detection units which detect respective cell voltages of the electric rechargeable cells;
a switch group including a plurality of switches which are respectively connected between the electric rechargeable cells; and
a control unit which designates a electric rechargeable cell having a highest cell voltage in the electric rechargeable cells possessed by the electric storage pack as a group in accordance with detection results by the cell voltage detection units and forms a discharge line from the electric rechargeable cell designated as forming the group to the feeding circuit by controlling the switches of the switch group individually.

2. A discharge control system according to Claim 1, wherein
the electric rechargeable cells comprise lithium ion electric rechargeable cells.

3. A discharge control system according to any of the preceding claims, wherein
the switch group has:
a first switch group including a plurality of first switches which are connected to a negative side input terminal of the feeding circuit; and
a second switch group including a plurality of second switches which are connected to a positive terminal of the feeding circuit, and
wherein
the control unit closes any one of first switches in the first switch group and any one of second switches in the second switch group, so as to form a discharge line from the plurality of electric rechargeable cells to the feeding circuit.

4. A discharge control system according to any of the preceding claims, wherein
the control unit selects the electric rechargeable cell to be designated as forming the group so that a discharge voltage of the electric rechargeable cell designated as forming the group falls within a voltage range which can drive the load.

5. A discharge control system according to any of the preceding claims, wherein
when a different electric rechargeable cell becomes a electric rechargeable cell having a highest cell voltage as a result of discharge from the electric rechargeable cell designated as forming the group, the control unit designates the different electric rechargeable cell as a different group and forms a discharge line from the different electric rechargeable cell of the different group to the feeding circuit.

6. A discharge control system according to any of the preceding claims, wherein
when a electric rechargeable cell having a lowest cell voltage in electric rechargeable cells designated as forming the group becomes a electric rechargeable cell having a lowest cell voltage in the plurality of electric rechargeable cells possessed by the electric storage pack as the result of discharge from the electric rechargeable cell designated as forming the group, the control unit designates a electric rechargeable cell having a highest cell voltage in the electric rechargeable cells possessed by the electric storage pack as forming a different group and forms a discharge line from the electric rechargeable cell of the different group to the feeding circuit.

7. A discharge control system according to any of the preceding claims, wherein
the control unit excludes a group which is designated as forming a group including a electric rechargeable cell having a lowest cell voltage in the electric rechargeable cells possessed by the electric storage pack from the group to be selected.

8. A discharge control system according to any of the preceding claims, wherein
the switch group has:
a first switch group including a plurality of first switches which are connected to a negative side input terminal of the feeding circuit; and
a second switch group including a plurality of second switches which are connected to a positive side terminal of the feeding circuit, and
wherein
the control unit closes any one of first switches in the first switch group and any one of second switches in the second switch group, so as to form a discharge line from a electric rechargeable cell having a highest cell voltage in the plurality of electric rechargeable cells possessed by the electric storage pack to the feeding circuit.

9. A discharge control system according to any of the preceding claims, wherein
when the cell voltage of the electric rechargeable cell having the highest cell voltage becomes equal to a cell voltage of a electric rechargeable cell having a lowest cell voltage in the plurality of electric rechargeable cells possessed by the electric storage pack has a result of discharge from the electric rechargeable cell having the highest voltage, the control unit switches the discharge line.

10. A discharge control system according to any of the preceding claims, wherein
when the cell voltage of the electric rechargeable cell having the highest cell voltage becomes equal to a value resulting from subtraction of a predetermined value from the cell voltage of a electric rechargeable cell having a second highest cell voltage in the plurality of electric rechargeable cells possessed by the electric storage pack as a result of discharge from the electric rechargeable cell having the highest voltage, the control unit switches the discharge line.

11. A discharge control system according to any of the preceding claims, wherein
the cell voltage detection units detect continuously or periodically cell voltages of the plurality of electric rechargeable cells, and wherein
the control unit continuously controls the switches in accordance with detection results by the cell voltage detection units.
